(19) **Europäisches Patentamt**
**European Patent Office**
**Office européen des brevets**

(11) **EP 4 564 234 A1**

(12) **EUROPEAN PATENT APPLICATION**

(43) Date of publication:
**04.06.2025 Bulletin 2025/23**

(21) Application number: **23307081.2**

(22) Date of filing: **29.11.2023**

(51) International Patent Classification (IPC):
*G06N 5/01* $^{(2023.01)}$

(52) Cooperative Patent Classification (CPC):
**G06N 5/01; G06N 7/01;** G06N 20/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Mitsubishi Electric R&D Centre Europe B.V.**
**1119 NS  Schiphol Rijk Amsterdam (NL)**
Designated Contracting States:
**FR**
• **MITSUBISHI ELECTRIC CORPORATION**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC ME MK MT NL NO PL PT RO RS SE SI SK SM TR**

• **Centre National de la Recherche Scientifique**
**75016 Paris (FR)**
• **Institut National de Recherche en Informatique et en Automatique (INRIA)**
**35042 Rennes (FR)**

(72) Inventors:
• **MENTRÉ, David**
**35708 RENNES CÉDEX 7 (FR)**
• **NOGUCHI, Reiya**
**TOKYO, 100-8310 (JP)**
• **MARKEY, Nicolas**
**35042 RENNES CÉDEX (FR)**
• **JÉRON, Thierry**
**35042 RENNES CÉDEX (FR)**
• **SANKUR, Ocan**
**35042 RENNES CÉDEX (FR)**

(74) Representative: **Plasseraud IP**
**104 Rue de Richelieu**
**CS92104**
**75080 Paris Cedex 02 (FR)**

(54) **METHOD FOR DETERMINING A SEQUENCE OF ACTIONS TO BE PERFORMED BY AN IMPLEMENTATION OF A COMPUTER PROGRAM**

(57)    The disclosure relates to a method (10) for determining, from a requirements automaton ($A_R$) comprising a plurality of states ($s_0$, $s_1$, ... $s_n$), a sequence of actions (SeqA) to be performed by an implementation (I) of a computer program to achieve a predetermined result (Obj) which is embodied by a set of states $O$ u *Error* $_{A_R}$ in the requirements automaton ($A_R$), the method being implemented by an electronic device, the method comprising at least one iteration of the following steps:
- selecting (S01), within a tree-like data structure (T1), a subsequence (SSeqA) of actions;
- determining (S02), using the requirements automaton ($A_R$), a current action ($v^{in}$) to be executed after the subsequence of actions (SSeqA);
- executing (S03), by the implementation (I), the subsequence of actions (SSeqA) and the current action ($v^{in}$), delivering a current action result ($v^{out}$);
- executing (S04), by the implementation (I), as a function of the current action result ($v^{out}$) and as a function of an actions optimization data structure (AODS), a complementary subsequence of actions (CSSeqA) delivering a reward value ($r$) associated to the current action ($v^{in}$);
- adding (S05) the current action ($v^{in}$) and its reward value ($r$) within the tree-like data structure (T1) and determining if said predetermined result (Obj) is reached for obtaining the sequence of actions (SeqA).

Figure 2

# EP 4 564 234 A1

**Description**

TECHNICAL FIELD

The disclosure relates to the field of computer technologies. More particularly, the disclosure relates to the field of determining the behaviour of computer programs. More specifically, the disclosure relates to the determination of the behaviour of black-box computer programs.

BACKGROUND ART

In many situations, it has to be dealt with black-box computer programs or systems with cyclic behaviour where at each cycle, the system reads valuation input variables and outputs valuation output variables. This kind of programs can be found in real-time computer systems for example. With this kind of computer programs, a question of interest is to find a sequence of inputs that guides the system in a particular state, for instance, obtaining a particular output valuation.

Finding sequences of inputs that guide such programs or systems in particular states, has several applications. The first example is in online black-box program testing, in which the goal is to find executions satisfying a coverage criterion by interacting with the program only via input feeding/output reading. The second example is in artificial-intelligence planning, in which it is useful to compute a plan satisfying a given objective.

Since the functioning of the program is black-box, the source code of the system is not accessible, and the interaction only depends on the sequence of input and output variables. Then, the difficulty is that a user that provides those inputs does not know a priori what outputs the system will provide; these can only be observed during the interaction. This formalism appears in several areas such as control programs, for instance, programmable logic controllers for factory automation systems; but also, in artificial-intelligence planning problems, in which one interacts in a cyclic way with a system by sending actions (inputs) and observing its state (outputs), with the goal of guiding the system to a particular state.

In these cases, however, the property of the executions can be specified using a set of requirements given in the form of at least one automaton, called requirements automaton. Transitions of this automaton are for example guarded by Boolean combinations on input and output valuations, so that they recognize sequences of valuations of input (actions) and output (results) variables. Such an automaton accepts sequences of input-output valuations and if one sequence satisfies the properties one is looking for (a coverage criterion in testing, or the objective in planning), a final state is reached in the automaton.

The requirement-automaton formalism can be implemented in conformance testing where one wants to check that an implementation under test (IUT for short) conforms to its specification, and more specifically, the problem of online synthesizing test cases that correctly check this conformance. By online, one means that part of the synthesis is performed during execution.

The problem to solve is, with such a requirement automaton in hand, to find the sequence of actions (inputs) that will drive the black-box implementation of the computer program to expose a given behaviour (i.e., an expected objective).

For solving this problem, the interactions with the black-box computer program can be seen, for instance in the case of testing, as a game between a tester and the computer system that reacts to the actions of the tester. In such a game, the tester wants to drive the computer system to some particular state or show some particular behaviour where non-conformance is suspected to occur. These behaviours are usually described by test objectives. They can be derived from coverage criteria, e.g., state or transition coverage, or written from requirements. The way these test objectives are designed is out of the scope of this work. In such a situation, the control of the tester over the system is limited: it can choose the inputs to be given to the system (which are thus controllable), but not the outputs (which are uncontrollable). The system can then be seen as an opponent, and the tester wins the game if it manages to drive the computer system to a test objective.

One solution to this problem could be to randomly test all the possible inputs accepted by the automaton until one sequence of inputs enables to reach an objective (i.e., a final state) exposed in the requirements automaton. While this solution could possibly allow finding a suitable sequence of inputs (actions), it provides no guarantees regarding the time taken for obtaining the solution, neither does it provide guarantees to effectively find a suitable solution.

It is thus necessary to provide a solution for efficiently finding a sequence of actions (inputs), from a requirement automaton, which allows driving a black-box implementation of a computer program to expose an expected behaviour, materialized by a final state of the requirement automaton.

SUMMARY

The present disclosure aims at improving the situation. In particular, the present disclosure aims at overcoming at least some of the limitations of the prior art discussed above, by proposing a solution enabling an efficient and faster determination of sequences of actions for reaching a predetermined behaviour or objective.

This is achieved by a method for determining, from a requirements automaton, comprising a plurality of states, a sequence of actions to be performed by an implementation of a computer program to achieve a predetermined result which is embodied by a set $0 \cup Error_{AR}$ in the requirements automaton, the method being implemented by an electronic device. According to the disclosure, the method comprises at least one iteration of the following steps:

- selecting, within a tree-like data structure, a subsequence of actions,
- determining, using the requirements automaton, a current action to be executed after the subsequence of actions,
- executing, by the implementation, the subsequence of actions and the current action, delivering a current action result,
- executing, by the implementation, as a function of the current action result and as a function of an actions optimization data structure, a complementary subsequence of actions delivering a reward value associated to the current action,
- adding the current action and its reward value within the tree-like data structure and determining if said predetermined result is reached for obtaining the sequence of actions.

By implementing this method, the sequence of actions performed by the implementation of the computer program to achieve the predetermined result is obtained in an efficient and faster way, with less resource consumption.

According to a characteristic, the iterations are stopped when it is determined that said current action result provides, in said requirements automaton, a transition from a current state to said set $O \cup Error_{AR}$.

According to a characteristic, the iterations are stopped when it is determined that executing the complementary subsequence of actions provides, in said requirements automaton, a transition from a current state to said set $O \cup Error_{AR}$.

According to a characteristic, wherein executing the complementary subsequence of actions comprises:

- obtaining, in said requirements automaton, a current state, the current state being determined from said current action result,
- identifying, in said actions optimization data structure, a sequence of actions which are likely to allow reaching said predetermined result from said current state,
- selecting a predetermined number of actions, from the action of the sequence of actions, delivering the complementary subsequence of actions,
- sequentially executing, by the implementation, each action of the complementary subsequence of actions, each result of said each action allowing a transition, in said requirements automaton, from a state to an intermediate state,
- determining the reward value of said complementary subsequence of actions as a function of the intermediate state reached in said requirements automaton at the end of the execution of the complementary subsequence of actions.

According to a characteristic, the reward value associated to the current state and current action is function of a distance separating last state of the requirements automaton from the set $O \cup Error_{AR}$.

According to a characteristic, the distance is determined as a function of the remaining intermediate states between the current state and the set $O \cup Error_{AR}$.

According to a characteristic, the maximum number of actions of the complementary subsequence of actions is bounded.

According to a characteristic, the actions optimization data structure is built on the basis of the requirements automaton and in that the actions optimization data structure recursively identifies, starting from the set $O \cup Error_{AR}$, some possible sequences of actions to perform to transit between states of the requirements automaton in order to reach the set $O \cup Error_{AR}$.

According to a characteristic selecting, within the tree-like data structure, the subsequence of actions is performed as a function of said actions optimization data structure.

According to a characteristic, the subsequence of actions is selected as a function of said actions optimization data structure for a predetermined number of iterations.

According to a characteristic, once the predetermined number of iterations is reached while the predetermined result remains unreached, the subsequence of actions is selected as a function of reward values stored in said tree-like data structure.

The bound of the predetermined number of iterations applies to each node of the tree-like data structure separately. This allows applying the selection in several directions.

According to another aspect, the invention also relates to a system for determining, from a requirements automaton, comprising a plurality of states, of a sequence of actions to be performed by an implementation of a computer program to achieve a predetermined result which is embodied by a set $O \cup Error_{AR}$ of the requirement automaton, said system comprising at least one processor and at least one memory. The system is configured so that at least one processor carries out the method as exposed above.

The present disclosure aims also at a computer program comprising instructions causing the implementation of the method defined above when such instructions are run by a processor.

BRIEF DESCRIPTION OF DRAWINGS

The disclosure will be better understood upon reading the following description, given as an example that is in no way limiting, and made in reference to the figures which show:

- Figure 1: an example of a requirement automaton used by the method,
- Figure 2: a diagram representing the main steps of an exemplary embodiment of a method for determining a sequence of actions to be performed by an implementation of a computer program,
- Figure 3: illustrates an actions optimization data structure,
- Figure 4: illustrates an example of device designed to produce the sequences of actions according to the method of the disclosure.

In these figures, references identical from one figure to another designate identical or analogous elements. For reasons of clarity, the elements shown are not to scale, unless explicitly stated otherwise. Also, unless required by the language of the description, the order of steps represented in these figures is provided only for illustration purposes and is not meant to limit the present disclosure which may be applied with the same steps executed in a different order.

DESCRIPTION OF EMBODIMENTS

As exposed, the disclosure relates to a method, and relative devices and system, for computing executions satisfying automata requirements in black-box computer programs or systems. Black-box programs are basically programs with which the sole possible interaction consists in sending inputs and observing outputs. For clarity purposes, it is defined that requirement automata are a set of requirements relatively to the implementation of the program to be tested or to be actioned, these requirements being formalized under the form of one or several automata (which are deterministic finite automata), defining sequences of actions to perform and their chaining. Thus, according to the disclosure, computing executions satisfying a requirement automaton means, starting from an initial state of the automaton, reaching a final state or an error state of the automaton through a given sequence of actions inputted to the black-box computer program, each action resulting in a valued output of the computer program, each valued output driving a transition to a state of the automaton, and so on, until the final state or an error state is reached. An example of such automata is described herein after.

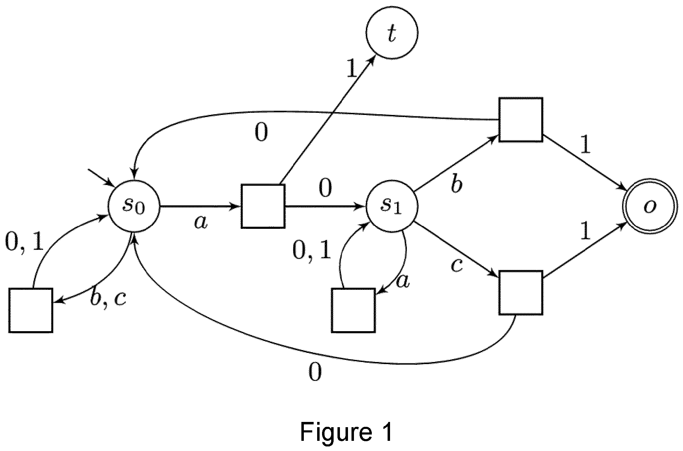

The disclosed method is useful for online testing of computer programs and systems, but also in artificial-intelligence planning and allows limiting resource consumption for achieving the requirements. Generally speaking, the method involves a reinforcement-learning algorithm (e.g. Monte-Carlo tree search), the performance of which being highly improved thanks to specific reward attribution techniques applied thanks to the requirements automaton. An example of requirement automaton ($A_R$) is described in relation to the figure 1. For the sake of readability, input and output letters are used instead of atomic propositions. Circles represent states (here "s0", "s1", "t" and "o"). "s0" is the initial state while "o" is the final state. Squares represent the execution of the implementation under scrutiny. In addition, {a, b} are input letters (fed to the implementation of the program), and {0, 1} are output letters (provided by the implementation of the program). For example, in the automaton of figure 1, the initial state allows inputting "a", "b" or "c" to the implementation. As illustrated, inputting "b" or "c" will result in going back to the initial state, whatever the result of the implementation is following this input. Inputting "a" however, will allow transiting to state s1 if the result provided by the implementation is "0". If the result is "1", terminal state "t" will be reached. From state "s1", Inputting "a" will loop to state "s1 ", whatever the result of the implementation is. On the contrary, inputting "b" or "c" may allow reaching final state "o" (i.e. the predetermined result Obj, or objective) if the result of the implementation is "1". In the other case (the result of the implementation is "0"), one loops back to the initial state "s0". In this example, it exists a theoretical covering trace (path) since the input sequence "ab" could generate the trace (a0b1) in a "correct" implementation, and this would lead to reach the final state "o" from initial state "s0", in $A_R$. This example of automaton is deterministic; In addition, letting "t" be an Error state makes it a safety automaton. It could be made complete by adding looping input-output transitions (similar to the transitions to the bottom left of "s0") on "t" and "o". The implementation of such an automaton is realized, in the context of the disclosure, in a convenient form, i.e., a data structure which is parsed, while executing the various iterations of the method according to the disclosure and which are described herein after. This data structure can take any convenient form, e.g., AIGER format. Of course, this example of automaton is purely illustrative.

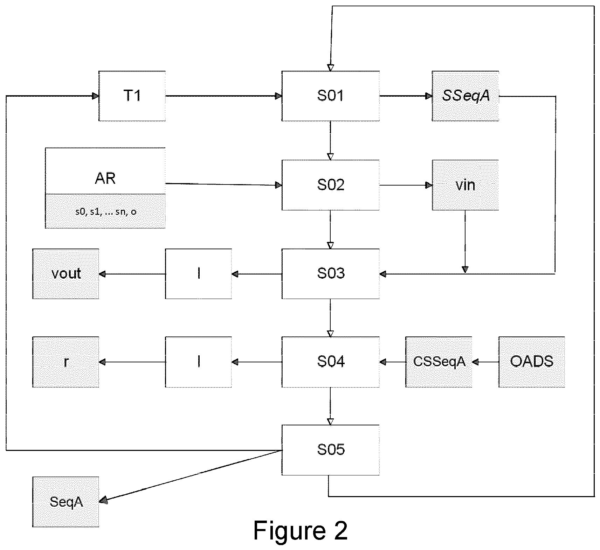

Figure 2 represents schematically the main steps of a method 10 for determining a sequence of actions to be performed on an implementation of a computer program to achieve an objective (which can be a test objective or an overall action objective, e.g., achieving a predetermined result), thanks to the use of at least one automaton defining requirements.

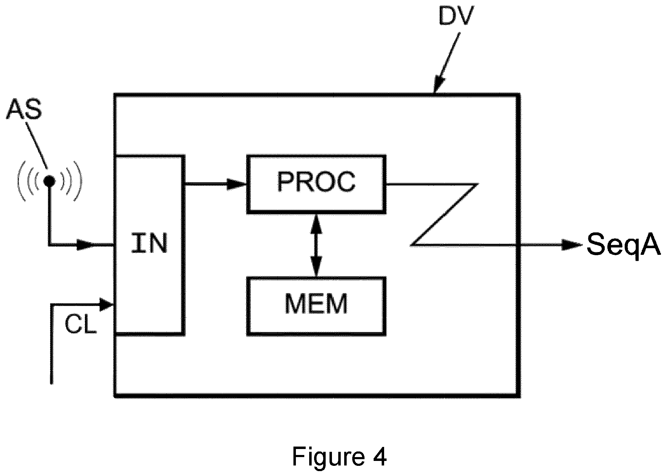

The determining method 10 is carried out by a computer system or device (represented in figure 4 described below).

More specifically, while the implementation I itself is black-box, it is assumed, however, that the implementation I also behaves as a finite (unknown) automaton; it is input-complete, meaning that any action (input) can be set by the testing environment, and it is output-deterministic, meaning that any output state (result) has exactly one transition. Last, it is assumed that from any input state of I, it is possible to reset I to its unique initial state at any time. These properties ensure that if one feeds the implementation an input sequence from the initial state of the implementation, then the system produces a unique output sequence.

As illustrated by figure 2, it is disclosed a method 10 for determining, from a requirements automaton $A_R$, comprising a plurality of states $(s_0, s_1, ... s_n)$, a sequence of actions SeqA to be performed by an implementation I of a computer program to achieve a predetermined result Obj which is embodied by the set of states $O \cup Error_{AR}$ (a final state (0) and/or error states as a function of the situation) of the requirement automaton $A_R$. According to the disclosure, the method comprises at least one iteration of the following steps:

- selecting S01, within a tree-like data structure T1, a subsequence SSeqA of actions;
- determining S02, using the requirement automaton $A_R$, a current action $v^{in}$ to be executed after the subsequence of actions SSeqA;
- executing S03, by the implementation I, the subsequence of actions SSeqA and the current action $v^{in}$, delivering a current action result $v^{out}$. This step also allows obtaining a transition, in the requirement automaton $A_R$, from a current state $s_i$ to a subsequent state $S_{i+1}$;
- executing S04, by the implementation I, as a function of the current action result $v^{out}$ and as a function of an action optimization data structure AODS, a complementary subsequence of actions CSSeqA delivering a reward value r associated to the current action $v^{in}$. This step also allows obtaining at least one transition, in the requirement automaton $A_R$, from the subsequent state $s_{i+1}$ to an intermediate state $s_{i+j}$;
- adding S05 the current action $v^{in}$ and its reward value r within the tree-like data structure T1 and determining if the predetermined result Obj is reached for obtaining the sequence of actions SeqA.

The tree-like data structure T1 is built starting from an empty data structure, being expanded as a function of a so-called tree policy. As detailed below, the tree policy, selects branch to expand as a function of the input states of the requirement automaton $A_R$. At the first iteration, since no trees exist, a first action (valuation) is directly determined (with the example of figure 1, it would be either "a", "b" or "c") in step S02 (since the tree-like data structure is empty, the subsequence of actions SSeqA is also empty).

Thus the proposed method allows providing the reward value to the current action $v^{in}$, (the current action $v^{in}$ being provided by the requirement automaton $A_R$, on the basis of the previous actions handled in previous iterations and registered in the tree-like data structure T1) not only on the result of the execution of the current action $v^{in}$ itself, but also on a rollout of a specific complementary subsequence of actions CSSeqA, which are executed by the implementation I after the current action $v^{in}$. Unlike other possible methods of prior art, the specific complementary subsequence of actions CSSeqA is selected according to a promising strategy for reaching the predetermined result Obj. This promising strategy is arbitrarily denoted "greedy strategy" and it is selected inside the action optimization data structure AODS. In other words, after the current action $v^{in}$ has been executed, another specific series of subsequent actions are executed, with respect to the requirement automaton $A_R$. In an example embodiment, the reward (the value of which may be comprised into a given interval, e.g., between 0 and 1 or other suitable boundaries, as explained below) attributed to the result of the current action $v^{in}$ is calculated as a function of the distance separating the state reached (in the requirement automaton $A_R$) after the specific complementary subsequence of actions CSSeqA from the predetermined result Obj.

The iterations of the disclosed method are processed until the predetermined result Obj is reached, that is either until the current action $v^{in}$ allows reaching the predetermined result Obj or until the specific complementary subsequence of actions CSSeqA allows reaching the predetermined result Obj. According to the disclosure, this allows obtaining fast converging of a solution for achieving the predetermined result Obj compared to uniform, naive and blind existing solutions.

The specific complementary subsequence of actions CSSeqA, according to the disclosure, is selected from the action optimization data structure AODS which comprises at least one possible path for reaching the predetermined result Obj from a given state of the requirement automaton $A_R$. This action optimization data structure AODS is precalculated (preprocessed) based on said requirement automaton. In other words, once the current action $v^{in}$ is obtained, in at least one embodiment, the method comprises a step for determining, from the action optimization data structure AODS, the specific complementary subsequence of actions CSSeqA. According to the disclosure, the length of the specific complementary subsequence of actions CSSeqA determines the number of actions to be performed after the current action $v^{in}$. According to the disclosure, this length is parametrized and limited to a given number of actions. Once the actions of the specific complementary subsequence of actions CSSeqA are performed, a current (reached) state (CS) in the requirement automaton $A_R$ is obtained and this state is used to compute the distance with the predetermined result Obj, and thus to compute the overall reward given to the result provided to the current action $v^{in}$.

According to the disclosure, the method 10 can be implemented in the form of a *"Monte Carlo Tree Search"* algorithm which is modified in order to use the strategies of the action optimization data structure AODS. According to the disclosure, the use of the strategies of the action optimization data structure AODS can be done during the rollout phase (namely for obtaining the complementary subsequence of actions CSSeqA). In addition, a randomized algorithm can be added to either select a strategy coming from the action optimization data structure AODS or to randomly and uniformly select an input among the available inputs.

According to the disclosure, the action optimization data structure AODS can also be used during the selection S01, within the tree-like data structure T1, of the subsequence of actions SSeqA, in order to select the most promising starting point in the determination of the sequence of actions which should allow reaching the predetermined result (objective) Obj.

One aspect of the disclosure relates to the preprocessing the action optimization data structure AODS based on the requirement automaton $A_R$ and the specification of the implementation. This is done by a recursive algorithm, which starts from the predetermined result Obj and loops recursively until it reaches the initial state $s_0$ of the requirement automaton $A_R$. It is recalled that the predetermined result Obj can either be the final state o of the requirement automaton $A_R$ and/or an error (when for example the purpose of the actions is to test an implementation of a computer program to determine whether it can be driven to perform execution errors).

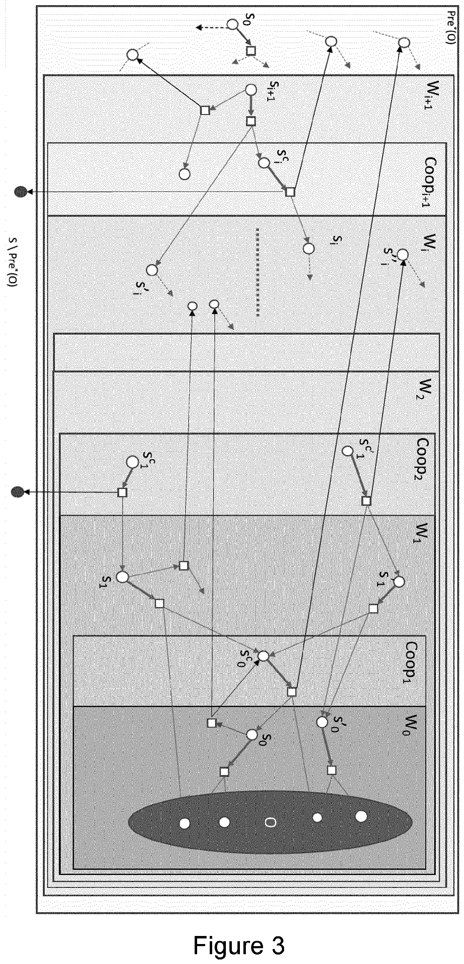

An illustration of the action optimization data structure is provided in relation with figure 3, this illustration, and the construction of the data structure being explained below.

A formal explanation of the action optimization data structure AODS creation process is detailed. From a point of view, finding a trace of $A_R$ that reaches 0 can be seen as a turn-based game played in the requirement automaton $A_R$ between two players: the tester, and the system (i.e., the implementation I of the computer program). At each step, the tester provides an input valuation $v^{in}$ (an action), and the system responds with an output valuation $v^{out}$ (result of this action as a function of the output valuation), and the game moves to a new state in the requirement automaton $A_R$. In such a situation, the online testing algorithm defines the strategy implemented by the tester, while the system plays a fixed strategy determined by the implementation, which is however a black-box, thus unknown to the tester.

For completeness purposes, the formal explanation of the requirement automaton $A_R$ and related algorithm is herein provided. Suppose one is given requirements specified as the complete deterministic safety automaton

$$A_R = \langle S_{A_R}, s_{init}^{A_R}, AP, T_{A_R}, F_{A_R} \rangle$$ with $Error_{AR} = S_{AR} \backslash F_{AR}$, and a test objective $O \subseteq S_{A_R}^{in}$, where:

- $S_{AR}$ is a finite set of states

$$\left( S_{A_R}^{in} \uplus S_{A_R}^{out} \right)$$

union of input states and output states,

- $s_{init}^{A_R} \in S_{A_R}^{in}$ is the initial state,
- AP is the set of atomic propositions, partitioned into

$$AP^{in} \uplus AP^{out},$$

-

$$T_{A_R} \subseteq \left( S_{A_R}^{in} \times Bool\left(AP^{in}\right) \times S_{A_R}^{out} \right) \uplus \left( S_{A_R}^{out} \times Bool(AP^{out}) \times S_{A_R}^{in} \right)$$

is a finite set of transitions,
- $F_{AR} \subseteq S_{AR}$ is the set of accepting states,
- AP is the set of atomic propositions, partitioned into

$$AP^{in} \uplus AP^{out},$$

- A valuation of AP is an element of $2^{AP}$ determining the set of atomic propositions that are true,
- $v^{in}$ (respectively $v^{out}$) is the projection of v on $AP^{in}$ (resp. $AP^{out}$) such that

$$v = v^{in} \uplus v^{out},$$

- Bool(AP) stands for the set of Boolean combinations of atomic propositions in AP.

One considers reactive systems that work as a succession of atomic moves: at each step, the tester first sets the input valuation $v^{in}$, then the implementation I immediately sets an output valuation $v^{out}$. The valuation observed at this atomic move is thus

$$v = v^{in} \uplus v^{out}.$$

A trace of the system is a sequence $\sigma = v_1 . v_2 ... v_n$ of atomic moves. Internal variables may be used by the implementation I to compute outputs from the inputs and from some internal state, but these are not observable by the environment (tester) since the implementation is a black box.

In the sequel, one will mainly be interested in states of $S_{A_R}^{in}$ : states in $S_{A_R}^{out}$ are transient. For a state $s^{in}$ and a valuation v, one lets $Post_{AR}(s^{in}, v)$ denote the set of states $s'^{in}$ such that $s^{in} \xrightarrow{v} s'^{in}$, and $Pre_{AR}(s^{in}, v)$ denote the set of states $s'^{in}$ such that $s'^{in} \xrightarrow{v} s^{in}$. Notice that for deterministic complete automata, $Post_{AR}(s^{in}, v)$ is a singleton.

For a set $B \subseteq S_{A_R}^{in}$, the set of immediate predecessors of B is $Pre_{AR}(B) = \bigcup_{s^{in} \in B, v \in 2AP} Pre_{AR}(s^{in}, v)$ and its set of immediate successors is $Post_{AR}(B) = \bigcup_{s^{in} \in B, v \in 2AP} Post_{AR}(s^{in}, v)$. From these sets, one can define the set of states from which B is reachable (i.e., that are co-reachable from B), as $Pre*_{AR}(B) = lfp(\lambda X. (B \cup Pre_{AR}(X))$, and the set of states that are reachable from B, $Post*_{AR}(B) = lfp(\lambda X. (B \cup Post_{AR}(X))$, where lfp denotes the least-fixpoint operator. The fixpoint defining $Pre*_{AR}(B)$ is equivalent to:
$B \cup Pre_{AR}(B) \cup Pre_{AR}(B \cup Pre_{AR}(B)) \cup Pre_{AR}(B \cup Pre_{AR}(B)) \cup Pre_{AR}(B \cup Pre_{AR}(B)) \cup \cdots$

This corresponds to an iterative computation of a sequence $(V_i) i \in N$, starting from $V_0 = \varnothing$ (which is why we get the least fixpoint) and such that $V_{i+1} = B \cup Pre_{AR}(V_i)$. Observe, by induction on i, that from any state s in $V_i$, there is a path to B within i steps. The sequence $(V_i)_{i \in N}$ is non-decreasing, and its limit is the set of all states from which B can be reached: from each state $s \in Pre*_{AR}(B)$, there is a finite trace $\sigma$ such that by reading $\sigma$ from s, one ends in B. Similarly, for each state $s' \in Post*_{AR}(B)$, there exists a state $s \in B$ and a trace $\sigma$ such that by reading $\sigma$ from s, one ends at s'.

These theoretical elements being introduced, one considers the game $(A_R, O \cup Error_{AR})$ played between the tester, playing the role of the environment, and the system (implementation I). The objective of the tester is to reach 0 or to reveal a non-conformance (that is, reach $Error_{AR}$). The tester controls the input valuations in $2^{APin}$, and observes the output valuations in $2^{APout}$ chosen by the system.

A notion of turn-based games is that of controllable predecessors. The immediate controllable predecessors of a set $B \subseteq S_{A_R}^{in}$ is the set:

$$CPre_{A_R}(B) = \{s \in S_{A_R}^{in} \mid \exists v^{in} \in 2^{AP^{in}} . \forall v^{out} \in 2^{AP^{out}} . Post_{AR}(s, v^{in} \cup v^{out}) \in B \cup Error_{A_R}\}.$$

Thus, from each state $s \in CPre_{AR}(B)$, the tester can select some valuation $v^{in}$ such that whatever the output $v^{out}$ returned by the system, it is guaranteed to either enter a state in B or exhibit a non-conformance. One can say that the tester can ensure entering B or reveal a non-conformance in one step (regardless of the system's strategy).

The set of controllable predecessors of a subset B is defined as $CPre_{A_R}^*(B) = lfp(\lambda X. (B \cup CPre_{AR}(X))$. Using the same reasoning as previously, this least fixpoint defines the set of all states from which the tester can ensure either entering B within a finite number of steps, or reveal a non-conformance, regardless of the system's strategy.

For example, in fig. 3, $CPre_{AR}(O) = \{s_0, s_0'\}$ and $CPre_{A_R}^*(O) = \{s_0, s_0'\} \cup O$.

A strategy of this game is a function $f: Tr(A_R) \rightarrow 2^{2^{AP^{in}}}$ that associates with each trace a subset of input valuations, those that can be applied at the next step. A strategy $f$ is said memoryless whenever, for any two traces $\sigma$ and $\sigma'$ reaching the same state in $A_R$, it holds $f(\sigma) = f(\sigma')$. A trace (path) $\sigma = v_1 \cdot v_2 \cdots v_n$ is compatible with a strategy $f$ from a state s if there exists a sequence of states $q_0, q_1, q_2,..., q_n$ such that $q_0$ = s and for all $0 \le i < n$, $q_i \xrightarrow{v_{i+1}} q_{i+1}$, and $v_{i+1}^{in} \in f(v_1 \cdot v_2 \cdots v_n)$. One writes $Outcome(f, s)$ to denote the set of all traces compatible with $f$ from s, also called the outcomes of $f$ from $s$.

A strategy $f$ for the tester is $B$-winning from state s if all its outcomes from s eventually reach $B \cup Error_{AR}$. A state s is $B$-winning if the tester has a winning strategy from s. The set of winning states can be computed using $CPre_{A_R}^*$ : For all $B \subseteq Sin$, there exists a strategy $f$ such that from all states $s \in CPre_{A_R}^*(B)$, all $Outcome(f,s)$ eventually reach $B \cup Error_{AR}$.

One could consider looking for a winning strategy directly in $(A_R, O \cup Error_{AR})$ in order to use it as a test algorithm. However, in most operational cases (i.e., with complex requirement automata), $CPre_{A_R}^*(O)$ does not contain the initial state; so, such a strategy can hardly be applied. In terms of game theory, this means that the tester does not have a winning strategy from the initial state.

One should thus consider alternative construction of the action optimization data structure, namely cooperative strategies.

For given set B $B \subseteq S_{A_R}^{in}$, consider $Pre_{AR}(B)$, which is the set of immediate predecessors of $B$: from these states, there exists a pair of valuations $(v^{in}, v^{out})$ for which the successor state is in B. From such a state, the tester cannot always guarantee reaching B in one step; however, it can choose an input valuation $v^{in}$ for which there exists $v^{out}$ which moves the system into $B$. In fact, when attempting to reach $B$, if the current state is not in $CPre_{AR}(B)$, then choosing such a $v^{in}$ is a good choice.

A strategy f is called $B$-cooperative if for all $s \in Pre_{AR}$, and all $v^{in} \in f(s)$, there exists $v^{out}$ such that $Post_{AR}(s, v^{in} \cup v^{out}) \in B$.

The construction of the action optimization data structure combines winning and cooperative strategies to define greedy strategies, which can be seen as best-effort strategies that can be employed when there are no winning strategies from the initial state. These guarantee progress towards $0$ in $A_R$ only against some system strategies. The greedy strategies which are stored in the action optimization data structure can then be used, in context, to select the best trace (path) to try to reach the objective. The use of these strategies can be mitigated, however, to ensure a parametrized diversity in the choice of the strategy to use, as explained below.

Let's consider $W_0 = CPre_{A_R}^*(O)$, which is non-empty since it contains 0. Let $f_0$ be a O-winning strategy as explained above. If $s_{init}$ belongs to $W_0$, then $f_0$ ensures reaching $0 \cup Error_{AR}$ from $s_{init}$ against all system strategies. In this case, one can stop and return $f_0$ as the greedy strategy.

The most frequent case is when $s_{init} \notin W_0$. In this case, one defines inductively an increasing sequence of sets of states $W_0, W_1,..., W_n$ and corresponding strategies such that $W_n$ is the set of all coreachable states.

Let's consider $i \geq 0$, and assume that the sequence has been defined until index $i$. Let $Coop_{i+1} = Pre_{AR}(W_i) \setminus W_i$ be the set of immediate predecessors of $W_i$ outside of states that have been already seen. Define $f_{i+1}^c$ as a $W_i$-cooperative strategy. Then, let $W_{i+1} = CPre_{A_R}^*(Coop_{i+1} \cup W_i)$, and consider a corresponding winning strategy $f_{i+1}^w$.

Let's denote by $f_{i+1}$ the pointwise union of the strategies $f_{i+1}^w$ and $f_{i+1}^c$ : for all $s \in S^{in}$, if $s \in Coop_{i+1}$, then $f_{i+1}(s) = f_{i+1}^c(s)$; if $s \in W_{i+1} \setminus Coop_{i+1}$, then $f_{i+1}(s) = f_{i+1}^W(s)$; and $f_{i+1}(s)$ is defined arbitrarily otherwise.

One stops this sequence whenever $Coop_i$ becomes empty. Notice that one has $CoReach(A_R, O) = Pre_{A_R}^*(O) = \bigcup_i W_i$, and that the sequence $(W_i)_i$ is increasing. The recursive construction thus builds an increasing hierarchy $(W_i)_i$ of larger and larger sets (inserted in the action optimization data structure), where at each level i, cooperation is needed in states of $Coop_i$ to get closer to 0 in this hierarchy. Because all states of $CoReach$ $(A_R, O)$ belong to some $W_i$, in particular, if 0 is reachable from $s_{init}$ (i.e., $s_{init} \in CoReach(A_R, O)$), there exists some index $k$ such that $s_{init}$ is in $W_k$, one calls the rank of s and note rank(s) the smallest index i such that $s \in W_i$.

$f_{greedy}$ is the strategy defined by $f_{greedy}(s) = f_{rank(s)}(s)$ for all $s \in CoReach(A_R, O)$; and arbitrarily for other states.

Notice that none of the winning strategies $f_i^w$ or $f_0$ composing f contains loops. However, since f is also composed of cooperative strategies, loops may occur due to outputs reaching states with higher ranks in the $(W_i)_i$ hierarchy. In other terms, $f_{greedy}$ algorithm does not guarantee reaching $0 \cup Error_{AR}$; and it may induce infinite loops against some system strategies.

The construction is illustrated in Fig. 3. States in $S_{A_R}^{in}$ where the tester states are represented by circles, while transient states in $S_{A_R}^{out}$ where the system states are represented by squares. In a state $s_i$ in $W_i$, the strategy $f_i$ is illustrated by bold grey arrows. Black arrows represent those outputs that either reach a state in a set $W_k$ with higher rank or reach S \ $CoReach(A_R, 0)$. For example, in $s_0 \in W_0$, the input in bold is winning since all subsequent outputs reach 0. But the other input is not winning since one possible output loops back in $s_0^c$ thus in $W_1$, and the other one goes back to some higher rank i. A different situation is illustrated by $s_1^c$ in $Coop_2$: after some input in the cooperative strategy, one output may reach $W_1$, but the other one reaches a state in S \ $CoReach(A_R, 0)$.

Using this algorithm builds the strategies $f_{greedy}$, which are inserted in the actions optimization data structure, and that requires minimal cooperation from the system to reach 0 or $Error_{AR}$, based on the requirements automaton only. Indeed, an output-deterministic implementation may conform to the requirements while being less cooperative: for a given input in a state, the proposed output, even if conformant, is not necessarily among those that decrease the rank. While they do not guarantee progress towards the objective at each step, those greedy strategies (precomputed) are a sort of best effort in this direction, when the behaviour of the implementation is unknown.

The greedy strategy can be used to define a randomized test algorithm, similar to a uniform random selection of input actions, among the available inputs.

Let's recall that after an active trace $\sigma$, the automaton $A_R$ is in a state $s_\sigma \in CoReach(A_R, 0)$. In the uniform (standard) strategy an input $v^{in}$ is then chosen uniformly in $\{v^{in}| (s_\sigma, v^{in}) \in CoReach^{in}(A_R, O)\}$. A simple modification consists in replacing this choice with a uniform choice in $f(s_\sigma)$ to restrict the domain to the transitions selected by the greedy strategy only. If $s_\sigma$ is in $W_i$ for some i, following this strategy will inevitably lead either to $Coop_i$ if i > 0, and to 0 if i = 0, or possibly to $Error$ if the implementation I is non-conformant. Once in $Coop_i$, the tester uses $f_{greedy}$ because there is a possibility of entering $W_{i-1}$; but the implementation, even if conformant, is not forced to be cooperative, and may go back to some $W_j$ with $j \geq i$ (i.e. go backward). Thus, this so-called purely greedy algorithm is not complete.

However, one can obtain a complete algorithm by randomizing between uniform and $f_{greedy}$: given $0 < \varepsilon < 1$, algorithm $f_{greedy}^\epsilon$ consists in using, at each state $s_\sigma$, $f_{greedy}(s_\sigma)$ with probability $1 - \varepsilon$; and a uniform choice with probability $\varepsilon$. The resulting $\varepsilon$ - greedy algorithm is then complete.

As exposed above, these strategies, available from the actions optimization data structure, are used not only to choose complementary subsequences of actions (CSSeqA), but also to select the subsequence (SSeqA) of actions to execute before.

More specifically, for example when the disclosed method is implemented in a *"Monte Carlo Tree Search"* algorithm (or equivalent algorithm), the $f_{greedy}^\epsilon$ algorithm is used as the rollout policy, instead of the pure "uniform" algorithm.

In addition, optionally, the tree policy (i.e. the selection of the subsequence of actions SSeqA) may also use the $f_{greedy}$ algorithm. More specifically, this modification consists in using the greedy algorithm within the tree policy. For instance, this is done by fixing a bound M > 0. During the expansion phase, in a given node (of the tree) whose projection in $A_R$ is state s, at the M first visits (i.e. at the M first iterations) to that tree node, the regular policy (e.g. the Upper Confidence bounds applied to Trees (UCT) policy for example) is restricted to the inputs provided by the greedy strategy $f_{greedy}(s)$; after the first M visits of that tree node, the algorithm falls back to the regular policy without restriction, which covers the whole set of input valuations $\{v^{in}| (s_\sigma, v^{in}) \in CoReach^{in}(A_R, O)\}$.

These two implementations of the method (for example by modifying the standard MCTS) do not modify its completeness property. They are intended to improve the convergence speed by introducing bias in probabilistic choices. These biases are based on additional knowledge or rather expectations about the system since they use offline computations on the requirements, not the implementation itself which is unknown.

Other possibilities would also be to modify the reward shaping by choosing the ranks as representing the reward value. Also, rather than using uniform probabilities among actions in $f(\cdot)$, in cooperative states it is possible to bias the choice of the inputs depending on the expected cooperation of the system after the input (i.e., the percentage of outputs that decrease the rank).

Another aspect of the disclosure relates to the calculation of reward values to accelerate convergence of the sequence to reach the predetermined result Obj (objective).

For instance, if the trace induced a run in $A_R$ that became very close to the objective Obj, then this trace might be given a better (i.e., lower) reward value than another trace whose run was far from the objective. According to the disclosure, $A_R$ is used solely to compute reward values of traces, while the actual testing is done by the proposed testing method. In other words, the execution steps (S03, S04) of the current action ($v^{in}$) and of the complementary subsequence of actions CSSeqA (obtained from the actions optimization data structure AODS) place the requirement automaton $A_R$ in current state s, and the distance of this state from the objective is used to determine a reward value associated to the current action ($v^{in}$) which is executed in step S03.

Let $C_0 = O$, and for $i \geq 1$, define $C_i = Pre_{AR}(C_{i-1}) \backslash (C_0 \cup ... \cup C_{i-1})$. Then, one has $U_{i \geq 0}\ C_i = CoReach(A_R, 0)$.

In fact, each $C_i$ is the set of states that are at distance i from some state in $0$ (in the sense that $A_R$ contains a run of length i to $0$). According to the disclosure, two manners of assigning rewards to simulation traces are considered.

For the first one, let m be maximal such that $C_m \neq \varnothing$. Let's define $C_{m+1} = S_{AR} \backslash CoReach(A_R, 0)$, that is, all states that are not coreachable. One assigns each trace $\sigma$ whose run in $A_R$ and ends in $s^R$ the reward $last\text{-}reward(\sigma) = r$ if $s^R \in C_k$. Notice that this is well-defined because the sets $C_i$ are pairwise-disjoint and they cover all states. Hence, the closer the trace $\sigma$ to objective $0$, the smaller its reward. A reward of 0 means that the state obtained by the trace satisfies the objective $0$.

The second reward assignment considers not only the last reward, but all rewards seen during the simulation, as follows. Let $r_0, r_1, r_2, ..., r_{k-1}$ denote the sequence of rewards encountered during simulation (these are the rewards of the prefixes of the trace $\sigma$). If the length of the simulation was less than K, one simply repeats the last reward to extend this sequence to size K. Then the reward value of the simulation is given by:

$$disc - reward_\gamma(\sigma) \ = \ r_{K-1} \sum_{i=0}^{K-1} \gamma^i\, r_i$$

where $\gamma \in (0, 1)$ is a discount factor. Notice that this value is 0, and minimal, if and only if $r_{K-1} = 0$. Furthermore, while $r_{K-1}$ is the most important factor, the second factor means that simulations whose first reward values are larger are favoured. This can in fact be seen as a weighted version of $last\text{-}reward$, where the weight is smaller if the simulation has small reward values in the first steps.

The proposed method 10 is fully automatic. Its implementation reduced both the development and verification time of software. It is emphasized that the present disclosure is not limited to the above exemplary embodiments. Variants of the above exemplary embodiments are also within the scope of the present disclosure.

As shown in figure 4, the device DV for determining a sequence of actions SeqA to be performed by an implementation I of a computer program to achieve a predetermined result Obj, as presented above, can comprises an antenna system AS, for example coupled through an interface IN to a processing circuit including a processor PROC and a memory MEM. Alternatively, or in complement, or as a variant, of the antenna system AS, necessary data (e.g. requirements automaton, implementation of the computer program to achieve the predetermined result) can also be received through a communication link CL allowing the device to determine the sequence of actions of the disclosure. The memory stores at least instructions of a computer program according to the present disclosure. By carrying out this type of processing, and in particular by implementing the data structures (T1, AODS) according to the method of the disclosure, the device's processor has proven to be able to search for thousands of possibilities and combinations in the various possible sequences of actions to achieve the predetermined result, in a short period of time. Such an effect is obviously not possible by attempting to calculate or obtain these action sequences manually or mentally, as this would be too time-consuming and completely pointless regarding the complexity of the problem.

In preferred embodiments, the computer system or device comprises one or more processors (which may belong to a same computer or to different computers) and one or more memories (magnetic hard disk, optical disk, electronic memory, or any computer readable storage medium) in which a computer program product is stored, in the form of a set of program-code instructions to be executed in order to implement all or part of the steps of the determining method 10. Alternatively, or in combination thereof, the computer system can comprise one or more programmable logic circuits (FPGA, PLD, etc.), and/or one or more specialized integrated circuits (ASIC), etc., adapted for implementing all or part of said steps of the determining method 10. In other words, the computer system comprises a set of means configured by software (specific computer program product) and/or by hardware (processor, FPGA, PLD, ASIC, etc.) to implement the steps of the determining method 10.

**Claims**

1. Method (10) for determining, from a requirements automaton ($A_R$) comprising a plurality of states ($s_0$, $s_1$, ... $s_n$), a sequence of actions (SeqA) to be performed by an implementation (I) of a computer program to achieve a predetermined result (Obj) which is embodied by a set of states $0$ u $Error_{AR}$ in the requirements automaton ($A_R$), the method being implemented by an electronic device, the method comprising at least one iteration of the following steps:

   - selecting (S01), within a tree-like data structure (T1), a subsequence (SSeqA) of actions;
   - determining (S02), using the requirements automaton ($A_R$), a current action ($v^{in}$) to be executed after the subsequence of actions (SSeqA);
   - executing (S03), by the implementation (I), the subsequence of actions (SSeqA) and the current action ($v^{in}$), delivering a current action result ($v^{out}$);
   - executing (S04), by the implementation (I), as a function of the current action result ($v^{out}$) and as a function of an actions optimization data structure (AODS), a complementary subsequence of actions (CSSeqA) delivering a reward value (r) associated to the current action ($v^{in}$);
   - adding (S05) the current action ($v^{in}$) and its reward value (r) within the tree-like data structure (T1) and determining if said predetermined result (Obj) is reached for obtaining the sequence of actions (SeqA).

2. The method (10) according to claim 1, wherein the iterations are stopped when it is determined that said current action result ($v^{out}$) provides, in said requirements automaton ($A_R$), a transition from a current state ($s_i$) to a state of said set $0$ u $Error_{AR}$.

3. The method (10) according to any one of claims 1 or 2, wherein the iterations are stopped when it is determined that executing (S04) the complementary subsequence of actions (CSSeqA) provides, in said requirements automaton ($A_R$), a transition from a current state ($s_i$) to a state of said set $0$ u $Error_{AR}$.

4. The method (10) according to any one of claims 1 to 3, wherein executing (S04) the complementary subsequence of actions (CSSeqA) comprises:

   - obtaining, in said requirements automaton ($A_R$), a current state ($s_i$), the current state ($s_i$) being determined from said current action result ($v^{out}$);
   - identifying, in said actions optimization data structure (AODS), a sequence of actions which are likely to allow reaching said predetermined result (Obj) from said current state ($s_i$);
   - selecting a predetermined number of actions, from the action of the sequence of actions, delivering the complementary subsequence of actions (CSSeqA);
   - sequentially executing, by the implementation (I), each action of the complementary subsequence of actions (CSSeqA), each result of said each action allowing a transition, in said requirements automaton ($A_R$), from a state ($s_k$) to an intermediate state ($s'_k$);
   - determining the reward value (r) of said complementary subsequence of actions (CSSeqA) as a function of the intermediate state ($s_l$) reached in said requirements automaton ($A_R$) at the end of the execution of the complementary subsequence of actions (CSSeqA).

5. The method (10) according to any one of claims 1 to 4, **characterised in that** the reward value (r) associated to the current state ($s_i$) and current action ($v^{in}$) is function of a distance separating last state ($s_l$) of the requirements automaton ($A_R$) from the set $0$ u $Error_{AR}$.

6. The method (10) of claim 5, wherein the distance (d) is determined as a function of the remaining intermediate states between the current state ($s_i$) and the set $0 \cup Error_{AR}$.

7. The method (10) according to any one of claims 1 to 6, wherein the maximum number of actions of the complementary subsequence of actions (CSSeqA) is bounded.

8. The method (10) according to any one of claims 1 to 7, wherein the actions optimization data structure (AODS) is built on the basis of the requirements automaton ($A_R$) and in that the actions optimization data structure (AODS) recursively identifies, starting from one of the state of the set $0 \cup Error_{AR}$, some possible sequences of actions to perform to transit between states of the requirements automaton ($A_R$) in order to reach the one of the state of the set $0 \cup Error_{AR}$.

9.  The method (10) according to any one of claims 1 to 8, wherein selecting (S01), within the tree-like data structure (T1), the subsequence (SSeqA) of actions is performed as a function of said actions optimization data structure (AODS).

10. The method (10) according to claim 9 wherein the subsequence (SSeqA) of actions is selected as a function of said actions optimization data structure (AODS) for a predetermined number of iterations (M).

11. The method (10) according to claim 10 wherein once the predetermined number of iterations (M) is reached while the predetermined result (Obj) remains unreached, the subsequence (SSeqA) of actions is selected as a function of reward values stored in said tree-like data structure (T1).

12. System for determining, from a requirements automaton ($A_R$), comprising a plurality of states (s0, s1, ... sn), of a sequence of actions (SeqA) to be performed by an implementation (I) of a computer program to achieve a predetermined result (Obj) which is embodied by a set of states $0 \cup Error_{AR}$ of the requirement automaton ($A_R$), said system comprising at least one processor and at least one memory, wherein at least one processor is configured to carry out a method (10) according to any one of claims 1 to 11.

13. Computer program product comprising instructions which, when executed by at least one processor, configure said at least one processor to carry out a method (10) according to any one of claims 1 to 11.

Figure 1

Figure 2

Figure 3

Figure 4

Europäisches
Patentamt

European
Patent Office

Office européen
des brevets

## EUROPEAN SEARCH REPORT

**Application Number**

EP 23 30 7081

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Mayank Daswani: "Generic Reinforcement Learning Beyond Small MDPs", <br> , <br> 1 August 2015 (2015-08-01), XP055680540, <br> DOI: 10.25911/5d7637291a901 <br> Retrieved from the Internet: <br> URL:https://openresearch-repository.anu.ed u.au/bitstream/1885/110545/1/Daswani%20The sis%202016.pdf <br> [retrieved on 2020-03-27] <br> * page 8 – page 9 * <br> ----- | 1-13 | INV. <br> G06N5/01 |
| A | KUSH GROVER ET AL: "An Anytime Algorithm for Reachability on Uncountable MDP", <br> ARXIV.ORG, CORNELL UNIVERSITY LIBRARY, 201 OLIN LIBRARY CORNELL UNIVERSITY ITHACA, NY 14853, <br> 10 August 2020 (2020-08-10), XP081738374, <br> * the whole document * <br> ----- | 1-13 | |

**TECHNICAL FIELDS SEARCHED (IPC)**

G06N

The present search report has been drawn up for all claims

| Place of search | Date of completion of the search | Examiner |
|---|---|---|
| The Hague | 7 May 2024 | Manfrin, Max |

EPO FORM 1503 03.82 (P04C01)